**Europäisches Patentamt**

**European Patent Office**

**Office européen des brevets**

(11) Veröffentlichungsnummer: **0 432 341 A2**

# EUROPÄISCHE PATENTANMELDUNG

(21) Anmeldenummer: **90100414.3**

(22) Anmeldetag: **10.01.90**

(51) Int. Cl.5: **F24D 19/10**

(30) Priorität: **12.12.89 DE 3940995**

(43) Veröffentlichungstag der Anmeldung:
**19.06.91 Patentblatt 91/25**

(84) Benannte Vertragsstaaten:
**AT BE CH DE DK FR GB IT LI NL SE**

(71) Anmelder: **Bähr, Thomas**
**Hirtenweg 11a**
**W-3000 Hannover 1(DE)**

(72) Erfinder: **Bähr, Thomas**
**Hirtenweg 11a**
**W-3000 Hannover 1(DE)**

(74) Vertreter: **Arendt, Helmut, Dipl.-Ing.**
**Alte Dorfstrasse 16**
**W-3160 Lehrte, OT Arpke(DE)**

(54) Verfahren und Einrichtung zum Regeln einer Heizungsanlage.

(57) Für ein Verfahren zum Regeln der den Wärmetauschern einer Heizungsanlage zugeführten Wärmemenge unter Verwendung einer mit einem Leistungsregler ausgestatteten Umwälzpumpe für den die Primärseite der Wärmetauscher durchströmenden Wärmeträger wird vorgeschlagen, die Antriebsenergie für den Transport des die Sekundärseite der Wärmetauscher durchströmenden Wärmeträger zu messen und dem Leistungsregler der Umwälzpumpe als Stellgröße aufzugeben.

Fig. 1

## VERFAHREN UND EINRICHTUNG ZUM REGELN EINER HEIZUNGSANLAGE

Die Erfindung betrifft ein Verfahren zum Regeln der den Wärmetauschern einer Heizungsanlage zugeführten Wärmemenge unter Verwendung einer mit einem Leistungsregler ausgestatteten Umwälzpumpe für den die Primärseite der Wärmetauscher durchströmenden Wärmeträger.

In der heiztechnischen Praxis sind Anlagen bekannt, bei welchen warmwasserbeheizte Luftheizgeräte eingesetzt werden. Sie dienen meistens der Beheizung großer Werkhallen. Werden solche Anlagen auf der Warmwasserseite mit gleichbleibendem Umwälzmengenstrom betrieben, dann verringert sich dort bei zurückgehender Wärmeabnahme sekundärseitig die Temperaturdifferenz zwischen Vorlauf und Rücklauf. Hierdurch kommt es zu Verschiebungen beim Temperaturgefälle zwischen den Primär- und den Sekundärseiten der Wärmetauscher und somit zu zusätzlichen Schwierigkeiten bei der Regelung der sekundärseitigen Luft-Austrittstemperatur. Außerdem arbeitet die primärseitige Umwälzpumpe ununterbrochen mit voller Leistung und entsprechend hohem Energieverbrauch.

In der EP 0 092 225 ist ein Verfahren beschrieben, bei welchem in einem Zweikreis-Heizungssystem auf der Sekundärseite der umgesetzte Wärmemengenstrom gemessen und dem Stellglied des Steuer organs im Primärkreis als Stellgröße aufgegeben wird. In Anlagen der oben beschriebenen Art wäre die sekundärseitige Messung des umgesetzten Wärmemengenstroms jedoch sehr aufwendig. Hier müßte zur Durchführung dieses Verfahrens bei jedem einzelnen Luftheizgerät die Differenz zwischen Luft-Eintritts- und Austrittstemperatur sowie der Luftdurchsatz gemessen werden.

Der Erfindung liegt die Aufgabe zu Grunde, Verfahren der eingangs genannten Art anzugeben, die einen besonders energiesparenden Betrieb auch solcher Heizungsanlagen ermöglichen, bei welchen sekundärseitig Luft als Wärmeträger die Wärmetauscher durchströmt.

Die Erfindung als Lösung zeichnet sich dadurch aus, daß die Antriebsenergie für den Transport des die Sekundärseite der Wärmetauscher durchströmenden Wärmeträgers gemessen und dem Leistungsregler der Umwälzpumpe als Stellgröße aufgegeben wird. Außerdem kann die Aufgabe auch dadurch gelöst werden, daß der Quotient aus dem primärseitig verbrauchten Wärmestrom $\dot{Q}_{ist}$ als Dividend und dem Sollwert der Temperaturdifferenz $\Delta\vartheta_{soll}$ zwischen Vorlauf und Rücklauf als Divisor dem Leistungsregler der Umwälzpumpe als Stellgröße aufgegeben wird.

Mit den Verfahren nach der Erfindung kann die Temperaturdifferenz in engen Grenzen konstant gehalten und der Energiebedarf für die Umwälzpumpe drastisch reduziert werden.

In der Zeichnung sind zwei Ausführungsbeispiele der Erfindung dargestellt.

Es zeigen:

Fig. 1    eine Heizungsanlage mit einer Einrichtung zur Messung der Gebläse-Antriebsenergie,

Fig. 2    eine Heizungsanlage mit primärseitiger Messung des umgesetzten Wärmeenergiestroms.

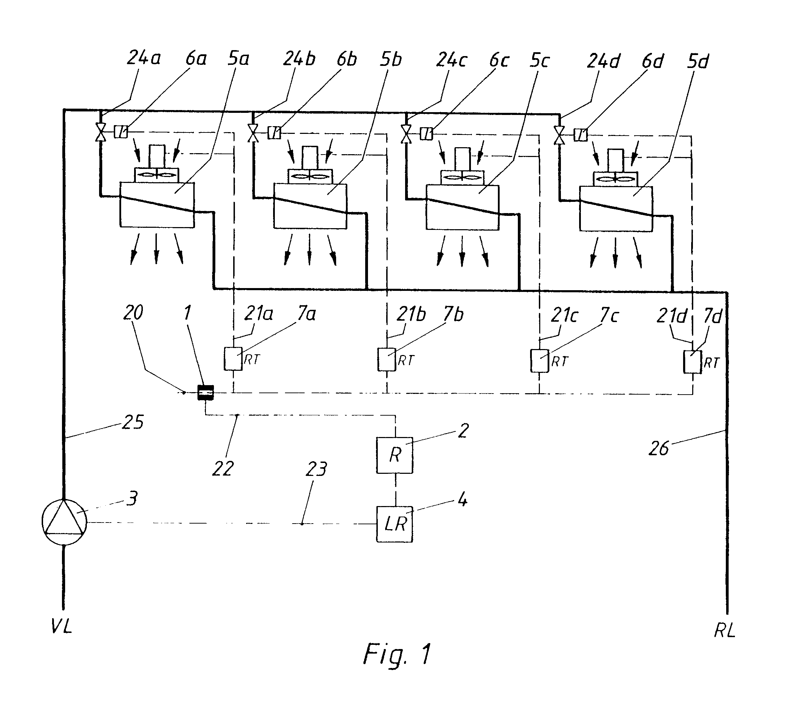

Bei dem mit der Fig. 1 dargestellten Beispiel einer Anlage mit Luftheizgeräten 5a bis 5d befindet sich in der Hauptzuführungsleitung für die Gebläse-Antriebsenergie der Stromfühler 1 zur Messung der Leistungsaufnahme. Die Energie-Zuführungsleitungen 21a bis 21d zu den einzelnen Gebläsen werden durch die Raumthermostate 7a bis 7d geschlossen oder unterbrochen. Der Stromfühler 1 ist über eine Meßwertübertragungsleitung 22 mit dem Rechner 2 verbunden, welcher seinerseits ein Stellsignal über den Leistungsregler 4 an die Umwälzpumpe 3 mittels Stellwertübertragungsleitungen 23 ausgibt. In der Wärmeträger-Zuleitung 24a bis 24d eines jeden Luftheizgerätes 5 ist ein Absperrorgan 6a bis 6d eingebaut, welches bei Abschalten des Gebläses die Zufuhr des Wärmeträgers unterbricht. Die Vorlaufleitung des primärseitigen Wärmeträgers ist mit 25, die Rücklaufleitung mit 26 bezeichnet.

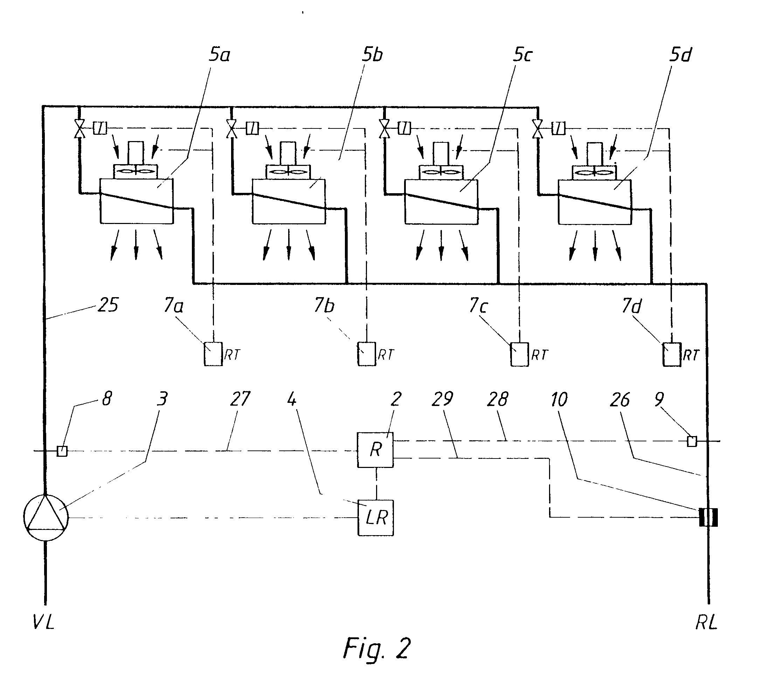

Bei der mit der Fig. 2 dargestellten Anlage mit den Luftheizgeräten 5a bis 5d und den Raumthermostaten 7a bis 7d befinden sich in der Vorlaufleitung 25 der Vorlauffühler 8, in der Rücklaufleitung 26 der Rücklauffühler 9 und der Mengenstromfühler 10. Diese Fühler sind mittels Meßwertübertragungsleitungen 27, 28 und 29 mit dem Rechner 2 verbunden. Der Rechner 2 gibt seine Stellsignale mittels Stellwertübertragungsleitungen über den Leistungsregler 4 an die Umwälzpumpe 3 aus.

Die Wirkungsweise des Systems gemäß Fig. 1 ist folgende:

Arbeitet die Anlage mit Vollast, dann sind sämtliche Luftheizgeräte 5a bis 5d eingeschaltet, und der Stromfühler 1 mißt die maximale Leistungsaufnahme. Das Meßsignal des Stromfühlers 1 verarbeitet der Rechner 2 zu einem Stellsignal an den Leistungsregler 4, der die Umwälzpumpe 3 ebenfalls mit Vollast arbeiten läßt. Bei geringer werdendem Heizenergiebedarf werden die Luftheizgeräte 5a bis 5d durch die Raumthermostate 7a bis 7d einzeln abgeschaltet. Gleichzeitig werden die Absperrorgane 6a bis 6d geschlossen. Der Stromfühler 1 mißt einen entsprechend geringeren Antriebsenergie-Strom, den er dem Rechner 2 übermittelt. Der Rechner 2 sendet ein Stellsignal an den Leistungsregler 4, welcher die Energiezufuhr zur Umwälzpumpe 3 entsprechend dem neuen Teillastfaktor drosselt. Da sich bei diesem Verfahren der Wärmemengenstrom synchron mit dem Umwälzmengenstrom ändert, bleibt der bei Vollast anliegende Wert für die Temperaturdifferenz auch im Teillastbetrieb erhalten.

Die Wirkungsweise der Anlage gemäß Fig. 2 läßt sich folgendermaßen beschreiben:

Es sei angenommen, die Anlage werde mit Warmwasser von 90˚ C/70˚ C betrieben. Bei Vollast, wenn also alle Luftheizgeräte 5a bis 5d eingeschaltet sind, stellt sich somit zwischen Vorlauf und Rücklauf eine Temperaturdifferenz von 20˚ C ein. Mit dieser Temperaturdifferenz als Sollwert wird die Anlage auch im Teillastbereich betrieben. Verringert sich der sekundärseitige Wärmebedarf, so wird ein Teil der Luftheizgeräte 5a bis 5d durch die diesen zugeordneten Raumthermostate abgeschaltet. Um die Temperaturdifferenz zwischen Vorlauf und Rücklauf dennoch konstant zu halten, wird der Umwälzmengenstrom des Heizmediums verringert. Zu diesem Zweck errechnet der Rechner 2 aus den Meßwerten der Fühler 8, 9 und 10 den momentanen abgehenden Wärmemengenstrom und dividiert diesen Wert durch den Temperaturdifferenz-Sollwert. Das Ergebnis ist ein Umwälzmengenstrom

$$\dot{m} = \frac{\dot{Q}_{ist}}{\Delta \vartheta_{soll}}$$

welcher der momentanen Wärmeleistung der Anlage genau angepaßt ist.

## Ansprüche

1. Verfahren zum Regeln der den Wärmetauschern einer Heizungsanlage zugeführten Wärmemenge unter Verwendung einer mit einem Leistungsregler ausgestatteten Umwälzpumpe für den die Primärseite der Wärmetauscher durchströmenden Wärmeträger, dadurch gekennzeichnet, daß die Antriebsenergie für den Transport des die Sekundärseite der Wärmetauscher durchströmenden Wärmeträgers gemessen und dem Leistungsregler der Umwälzpumpe als Stellgröße aufgegeben wird.

2. Verfahren zum Regeln der den Wärmetauschern einer Heizungsanlage zugeführten Wärmemenge unter Verwendung einer mit einem Leistungsregler ausgestatteten Umwälzpumpe für den die Primärseite der Wärmetauscher durchströmenden Wärmeträger, dadurch gekennzeichnet, daß der Quotient aus dem primärseitig verbrauchten Wärmestrom $\dot{Q}_{ist}$ als Dividend und dem Sollwert der Temperaturdifferenz $\Delta \vartheta_{soll}$ zwischen Vorlauf und Rücklauf als Divisor dem Leistungsregler der Umwälzpumpe als Stellgröße aufgegeben wird.

3. Einrichtung zur Durchführung des Verfahrens nach Anspruch 1, dadurch gekennzeichnet, daß die Zuführungsleitung für die Antriebsenergie der Transportvorrichtungen für den sekundärseitigen Wärmeträger einen Energiestromfühler aufweist, der durch eine Meßwertübertragungsleitung mit einem Rechner für den Leistungsregler der Umwälzpumpe verbunden ist.

4. Einrichtung zur Durchführung des Verfahrens nach Anspruch 2, dadurch gekennzeichnet, daß sie primärseitig einen Mengenstromfühler (10) sowie je einen Temperaturfühler für den Vorlauf (8) und den Rücklauf (9) aufweist und die Fühler (8, 9, 10) durch Meßwertübertragungsleitungen mit dem Rechner (2) verbunden sind.

Fig. 1

EP 0 432 341 A2

Fig. 2